# EUROPÄISCHE PATENTSCHRIFT

(11) **EP 3 425 474 B1**
(45) Veröffentlichungstag und Bekanntmachung des Hinweises auf die Patenterteilung: **08.01.2020**
(21) Anmeldenummer: 18180346.1
(22) Anmeldetag: 28.06.2018
(51) Int. Cl.: G05D 23/19, G05B 11/16

(54) **VERFAHREN ZUR ANSTEUERUNG EINES THERMOELEKTRISCHEN 2-PUNKT-ANTRIEBS EINES VENTILS EINES HEIZUNGS- UND/ODER KÜHLUNGSSYSTEMS**
METHOD FOR CONTROLLING A THERMOELECTRIC ON-OFF DRIVE OF A VALVE OF A HEATING AND/OR COOLING SYSTEM
PROCÉDÉ DE COMMANDE D'UN ENTRAÎNEMENT THERMOÉLECTRIQUE À 2 POINTS D'UNE VANNE D'UN SYSTÈME DE CHAUFFAGE ET/OU DE REFROIDISSEMENT

(30) Priorität: 05.07.2017 DE 102017114961
(43) Veröffentlichungstag der Anmeldung: 09.01.2019
(73) Patentinhaber: REHAU AG + Co, 95111 Rehau (DE)
(72) Erfinder: Pommer, Willi, 90427 Nürnberg (DE)

(56) Entgegenhaltungen:
- EP-A2- 0 295 466
- WO-A1-2016/034292
- US-A1- 2005 056 799

## Beschreibung

Die Erfindung betrifft ein Verfahren zur Ansteuerung eines thermoelektrischen 2-Punkt-Antriebs eines Ventils eines mit einem Temperiermedium betriebenen Heizungs- und/oder Kühlungssystems z.B. eines Gebäudes, insbesondere eines Flächenheizungs- und/oder Kühlungssystems. Vornehmlich betrifft die Erfindung die Kalibrierung eines thermoelektrischen 2-Punkt-Antriebs eines Ventils eines derartigen Heizungs- und/oder Kühlungssystems, um den thermoelektrischen 2-Punkt-Antrieb für die stetige Ansteuerung des Ventils einsetzen zu können. Ein Verfahren zur Kalibrierung eines thermoelektrischen 2-Punkt-Antriebs eines Ventils zeigt die Druckschrift WO 2016/034292 A1.

Die Regelung der Raumtemperatur von Heizungs- und Kühlungssystemen, insbesondere von Flächenheizungs- und Kühlungssystemen, teilweise auch von Heizkörpersystemen (nachfolgend allgemein mit Temperiersystem bezeichnet), geschieht üblicherweise über die Steuerung des Durchflusses des Temperiermediums durch thermoelektrische 2-Punkt-Antriebe, die ein Ventil am Heizkreisverteiler, an dem Verteiler für die Heizkörper, oder am Heizkörper selbst betätigen. Diese standardmäßig verwendeten thermoelektrischen 2-Punkt-Antriebe weisen ein mit typischerweise Wachs gefülltes Ausdehnungselement auf, das über ein Heizelement, typischerweise in Form eines temperaturabhängigen Widerstands (PTC), aufgeheizt wird. Damit werden derartige 2-Punkt-Antriebe mit elektrischen Signalen betrieben. Sobald die Betriebsspannung am thermischen Antrieb anliegt, wird dem PTC elektrische Energie zugeführt, wodurch das Ausdehnungselement erwärmt wird und sich ausdehnt. In einem Zeitraum von etwa vier Minuten, abhängig von der Umgebungstemperatur und der vorherigen Erwärmung des Ausdehnungselements, durchfährt der Antrieb dann seinen kompletten Arbeitsbereich bis zur Maximalöffnungsstellung des Ventils. Nach Wegnahme der Betriebsspannung kühlt das Ausdehnungselement ab, so dass das Ventil schließlich wieder seine Schließstellung einnimmt.

Die bekannten 2-Punkt-Antriebe werden also lediglich in zwei verschiedenen Betriebszuständen betrieben, nämlich ohne Betriebsspannung, wodurch sich die Schließposition des Ventils einstellt, und bei Betriebsspannung, bei der sich die Maximalöffnungsstellung des Ventils einstellt.

Die Dauer des Vorgangs "Ventil öffnen" und "Ventil schließen" ist vom Typ des thermoelektrischen Antriebs, von der Umgebungstemperatur und von der zum Zeitpunkt der Änderung der Ansteuerung im Innern des Antriebs herrschenden Temperatur abhängig.

Um bei dieser Betriebsweise zu vermeiden, dass eine für den Nutzer spürbare Temperaturschwankung durch die stoßweise Zufuhr elektrischer Energie eintritt, werden die Antriebe üblicherweise je nach Anforderung des Raums innerhalb eines festen Zeitabschnitts (Zykluszeit) für bestimmte Zeit geöffnet und für die verbleibende Zeitspanne des Zeitabschnitts geschlossen (PWM-Ansteuerung). Die Dauer der Zykluszeit muss an die thermische Speicherfähigkeit des Temperiersystems angepasst sein, um eine spürbare Schwankung der Oberflächentemperatur des Temperiersystems zu vermeiden. Bei Temperiersystemen mit einer geringen thermischen Speicherfähigkeit wird deshalb eine kurze Zykluszeit gewählt.

In selteneren Fällen werden für Temperiersysteme Antriebe verwendet, die entweder über ein Steuersignal oder durch gezieltes Ansteuern des Elektromotors in eine definierte Position gefahren werden (stetiger Antrieb oder 3-Punkt-Antriebe), um den Durchfluss durch den Temperierkreis so stetig zu beeinflussen.

Bei Verwendung von 2-Punkt-Antrieben zur Steuerung des Durchflusses des Temperiermediums von Temperiersystemen treten folgende Nachteile auf:
- Die Energiezufuhr in das Heiz- bzw. Kühlsystem erfolgt stoßweise und kann je nach thermischer Trägheit des Systems zu spürbaren Schwankungen der Oberflächentemperatur führen, wobei hier vor allem Systeme wie Heizkörper oder Flächenheizungs- und Kühlungssysteme auf Basis von Trockenbauelementen betroffen sind.
- Eine beliebige Verringerung der Zykluszeit, innerhalb der das Öffnen und Schließen der Ventile geschieht, ist wegen der trägen Reaktion der thermoelektrischen Antriebe nicht möglich. Die Mindestdauer der Zykluszeit liegt im Bereich von 15 Minuten.
- Eine über längere Zeit bestehende Ansteuerung des Antriebs bewirkt ein Aufheizen des Ausdehnungselements über das notwendige Maß hinaus, mit dem Nachteil, dass die Reaktion auf die Wegnahme der Ansteuerung stark zeitverzögert erfolgt und außerdem durch die auftretende mechanische Belastung eine Verringerung der Lebensdauer des Antriebs eintritt.
- Eine Beeinflussung der Durchflussrate des Heiz- bzw. Kühlkreises und somit die Steuerung der Leistung sowie die Beeinflussung der hydraulischen Verhältnisse erfolgt bei Verwendung der 2-Punkt-Antriebe üblicherweise durch Einstellung eines begrenzenden Ventils nach den in der Auslegung ermittelten Werten für den Auslegungsfall. Hierbei wird der mögliche Hub des für die Durchflusssteuerung verwendeten Ventils begrenzt oder ein zweites Ventil zur Begrenzung des Durchflusses verwendet. Erfolgt diese Einstellung nicht exakt oder gar nicht oder stellen sich nach der Inbetriebsetzung der Heizungsanlage Veränderungen gegenüber den in der Auslegungsplanung getroffenen Annahmen ein, so ergeben sich Betriebszustände, die eine teilweise Überversorgung und eine teilweise Unterversorgung einzelner Heizkreise und Räume zur Folge haben. Das kann auch in Betriebszuständen außerhalb des Auslegungsfalls geschehen. Der Einfluss von Fehlern, die bei der Einstellung des hydraulischen Abgleichs gemacht werden, wird durch die übliche Verwendung von 2-Punkt-Antrieben noch verschärft, da durch das komplette Öffnen eines Verteilerabgangs ein stärkerer hydraulischer Einfluss auf die anderen Heizkreise ausgeübt wird, als wenn ein Kreis nur zum Teil geöffnet wird.

Aufgabe der Erfindung ist es, ein Verfahren anzugeben, das es auf einfache Art und Weise ermöglicht, einen thermoelektrischen 2-Punkt-Antrieb eines Ventils eines Heizungs- und/oder Kühlungssystems z.B. eines Gebäudes als kostengünstigen stetigen Antrieb nutzen zu können.

Zur Lösung dieser Aufgabe wird mit der Erfindung ein Verfahren zur Ansteuerung eines thermoelektrischen 2-Punkt-Antriebs eines Ventils eines mit einem Temperiermedium betriebenen Heizungs- und/oder Kühlungssystems z.B. eines Gebäudes, insbesondere eines Flächenheizungs- und/oder Kühlungssystems, vorgeschlagen, wobei bei dem Verfahren
- der 2-Punkt-Antrieb durch ein elektrisches Ansteuersignal angesteuert wird, dessen Größe in Abhängigkeit von einer aktuell gewünschten Durchflussrate des Temperiermediums auf einen Wert zwischen einschließlich einem Minimalwert, bei dem das Ventil vollständig geschlossen ist, und einschließlich einem Maximalwert, bei dem das Ventil vollständig geöffnet ist, eingestellt wird,
- der 2-Punkt-Antrieb zur Ermittlung einer Minimalöffnungsstellung des Ventils, bei der sich eine vorgebbare Minimaldurchflussrate des Temperiermediums einstellt, und/oder zur Ermittlung einer Maximalöffnungsstellung des Ventils, bei der sich eine vorgebbare Maximaldurchflussrate oder die Maximaldurchflussrate des Temperiermediums einstellt, sequentiell durch Ansteuersignale unterschiedlicher Größe angesteuert wird,
- ein in dem Heizungs- und/oder Kühlungssystem angeordneter Sensor ein Messsignal ausgibt, das die sich aufgrund der Ansteuerung des 2-Punkt-Antriebs und damit der Einstellung des Ventils ergebende Durchflussrate des Temperiermediums repräsentiert, und
- das oder die Ansteuersignale für den 2-Punkt-Antrieb, das bzw. die der Minimaldurchflussrate und/oder der Maximaldurchflussrate zugeordnet ist bzw. sind (z.B. in einer Regelungseinheit des Heizungs- und/oder Kühlungssystems), abgespeichert wird bzw. werden.

Sinngemäß wird mit der Erfindung also vorgeschlagen, den thermoelektrischen 2-Punkt-Antrieb eines bzw. jedes Ventils eines mit einem Temperiermedium betriebenen Temperiersystems zu kalibrieren, um den betreffenden 2-Punkt-Antrieb wie einen stetigen Antrieb ansteuern zu können. Dazu wird die Tatsache berücksichtigt, dass der 2-Punkt-Antrieb erst mit Erreichen einer bestimmten Größe des elektrischen Ansteuersignals das Ventil aus dem Zustand "geschlossen" in den Zustand "öffnen" überführt. Die elektrische Energie, die bis zu diesem Zeitpunkt durch den 2-Punkt-Antrieb, d.h. durch das Ansteuerelement in das Heizelement des 2-Punkt-Antriebs eingespeist worden ist, beträgt im Regelfall einige %, z.B. 10 % bis 30 % derjenigen elektrischen Energie, die typischerweise aufgebracht werden muss, damit der 2-Punkt-Antrieb das Ventil in die Maximalöffnungsstellung überführt. Mit dem erfindungsgemäßen Verfahren wird nun genau die Größe des Ansteuersignals, d.h. die Größe der elektrischen Energie und damit letztendlich die Zeitdauer ermittelt, für die der 2-Punkt-Antrieb angesteuert werden muss, damit das Ventil seine Schließposition verlässt und anfängt zu öffnen.

Erfindungsgemäß wird nun also die Größe des Ansteuersignals, d.h. die dem 2-Punkt-Antrieb zuzuführende elektrische Energie ermittelt, die benötigt wird, um eine Minimaldurchflussrate des Temperiermediums zu realisieren. Dazu wird erfindungsgemäß ein Sensor genutzt, der im Temperiersystem verbaut ist. Bei diesem Sensor handelt es sich zweckmäßigerweise um einen mechanischen oder elektrischen/elektronischen Durchflussmengenmesser oder Durchflussratenmesser, um einen Temperaturfühler, um einen Durchflussschalter oder um eine Kombination der zuvor genannten Sensoren.

Insbesondere moderne Temperiersysteme verfügen im Rücklauf über einen elektrischen/elektronischen Temperaturfühler, der zur Optimierung des Energieverbrauchs genutzt wird. Gerade ein derartiger Temperaturfühler kann als Durchflussdetektor eingesetzt werden, indem anhand der Veränderung des Messsignals eines derartigen Temperaturfühlers erkannt wird, ob sich ein Durchfluss des Temperiermediums einstellt (Übergang "kein Durchfluss" zu "Durchfluss"). Denn wenn der Temperaturfühler ein Messsignal ausgibt, das um eine bestimmte Mindestdifferenz größer ist als vorherige Messsignale, so ist dies ein Anzeichen dafür, dass auf Grund der Ansteuerung des 2-Punkt-Antriebs das Ventil bzw. ein Ventil gerade den Zustand "Schließen" verlässt. Mechanische oder elektrische/elektronische Durchflussmengen- oder -ratenmesser sind grundsätzlich gegenüber Temperaturfühlern zu bevorzugen, um erfindungsgemäß eine Minimaldurchflussrate detektieren zu können.

Wenn nun die Größe des Ansteuersignals zur Erzielung der Minimaldurchflussrate des Temperiermediums auf die zuvor beschriebene Weise ermittelt worden ist, so lässt sich anhand dieser ermittelten Größe des Ansteuersignals und dem Maximalwert des Ansteuersignals, bei dem das Ventil vollständig geöffnet ist und bei dem es sich um einen Vorgabewert handelt, ermitteln, berechnen oder abschätzen, welche Größe das Ansteuersignal des 2-Punkt-Antriebs für eine bestimmte Durchflussrate, die zwischen der Minimaldurchflussrate und der Durchflussrate bei Maximalöffnungsstellung des Ventils liegt, aufweisen muss. Damit aber ist der 2-Punkt-Antrieb zumindest näherungsweise kalibriert und kann daher nun als stetiger Antrieb betrieben werden.

Erfindungsgemäß ist es ebenfalls möglich, anstelle der Minimaldurchflussrate oder zusätzlich zu dieser auch die Maximaldurchflussrate des Temperiermediums zu detektieren, um dann das entsprechende Ansteuersignal bzw. die Zeit, für die es am Antrieb anliegen muss (aufzubringende elektrische Energie), zu ermitteln. Dazu wird der 2-Punkt-Antrieb beispielsweise sequentiell solange mit Ansteuersignalen unterschiedlicher Größe angesteuert, bis über den Sensor keine nennenswerte Durchflussratenänderung ermittelt wird, d.h. keine Änderung der Durchflussrate um mehr als eine vorgebbare Differenz ermittelt wird.

Liegen nun durch das erfindungsgemäße Kalibrationsverfahren die Größen der Ansteuersignale für die Minimaldurchflussrate und die Maximaldurchflussrate vor, so kann durch beispielsweise Interpolationsverfahren die Größe desjenigen Ansteuersignals ermittelt, berechnet oder abgeschätzt werden, bei dem der 2-Punkt-Antrieb das Ventil soweit öffnet, dass sich eine bestimmte Durchflussrate des Temperiermediums einstellt.

Mit dem erfindungsgemäßen Verfahren lässt sich also für jeden 2-Punkt-Antrieb jedes Ventils eines Temperiersystems sozusagen der Bereich der Ventilverstellung ermitteln, innerhalb dessen die Ventilverstellung zu einer für den Betrieb des Temperiersystems relevanten Durchflussänderung kommt. Dieser im Idealfall lineare Bereich der Ventilverstellung kann dann wie bei einem stetigen Antrieb so angefahren werden, wie es für den Betrieb des Temperiersystems erforderlich ist. Damit aber ist es gelungen, die kostengünstigen thermoelektrischen 2-Punkt-Antriebe wie stetige Antriebe zu betreiben, die im Regelfall deutlich teurer sind als thermoelektrische 2-Punkt-Antriebe.

In vorteilhafter Weiterbildung der Erfindung kann vorgesehen sein, dass die Minimaldurchflussrate ausgehend von einem Ansteuersignal für den 2-Punkt-Antrieb, bei dem das Ventil vollständig geschlossen ist, durch Vergrößern des Ansteuersignals ermittelbar ist, bis der Sensor ein die Minimaldurchflussrate repräsentierendes Messsignal ausgibt.

Zweckmäßig kann es ferner sein, wenn sich die Maximaldurchflussrate ausgehend von einem Ansteuersignal für den 2-Punkt-Antrieb, bei dem das Ventil noch nicht vollständig geschlossen ist, durch Vergrößern des Ansteuersignals ermittelbar ist, bis der Sensor ein Messsignal ausgibt, das eine Durchflussrate repräsentiert, welche sich gegenüber der Durchflussrate, die durch eines der vorherigen Messsignale des Sensors repräsentiert ist, um weniger als eine vorgebbare Differenz unterscheidet.

Alternativ ist es auch möglich, dass die Maximaldurchflussrate ausgehend von einem Ansteuersignal für den 2-Punkt-Antrieb, bei dem das Ventil vollständig geöffnet ist, durch Verkleinerung des Ansteuersignals ermittelbar ist, bis der Sensor ein Messsignal ausgibt, das eine Verringerung der Durchflussrate um eine vorgebbare Differenz gegenüber der Durchflussrate bei in Maximalöffnungsstellung befindlichem Ventil repräsentiert.

Wie sich aus dem Vorstehenden ergibt, gelangt man erfindungsgemäß durch beispielsweise "try and error" ausgehend von einem Startwert für ein Ansteuersignal zu dessen Zielwert, bei dem es sich entweder um die Größe des Ansteuersignals zur Erzielung einer vorgegebenen Minimaldurchflussrate oder um die Größe des Ansteuersignals für eine vorgegebene Maximaldurchflussrate oder aber um beides handeln kann. Gemäß einer vorteilhaften Weiterbildung der Erfindung wird, ausgehend von einem Startwert, die Ermittlung der Minimaldurchflussrate und/oder der Maximaldurchflussrate des Temperiermediums und/oder die Art der zwecks Ermittlung der Minimaldurchflussrate und/oder der Maximaldurchflussrate des Temperiermediums erfolgenden Änderung des Ansteuersignals für den 2-Punkt-Antrieb anhand bekannter mathematischer Optimierungsverfahren, insbesondere Iterationsverfahren wie z.B. sukzessive Approximation durchgeführt.

In Abhängigkeit davon, wo im Temperiersystem der Sensor angeordnet ist, der für die Detektion der Minimaldurchflussrate und/oder der Maximaldurchflussrate bzw. zur Detektion des Übergangs "kein Durchfluss" zu "Durchfluss" oder umgekehrt, verwendet wird, können die erfindungsgemäßen Kalibriervorgänge für mehrere 2-Punkt-Antriebe des Temperiersystems gleichzeitig oder getrennt voneinander durchgeführt werden. Wenn beispielsweise im Rücklauf eines jeden Temperierkreises ein derartiger Sensor angeordnet wird, so können sämtliche 2-Punkt-Antriebe parallel kalibriert werden. Ist lediglich im Gesamtrücklauf aller Temperierkreise ein Sensor angeordnet, so müssen die 2-Punkt-Antriebe nacheinander kalibriert werden.

Die Kalibrierung kann auch im laufenden Betrieb des Temperiersystems von Zeit zu Zeit immer wieder durchgeführt werden.

Sofern der 2-Punkt-Antrieb für eine vorgebbare Mindestzeitspanne nicht betrieben worden ist, sein temperaturabhängiges Ausdehnungselement und auch das Heizelement also kalt sind, kann es vorteilhaft sein, wenn der 2-Punkt-Antrieb zum Betrieb für eine gewünschte Durchflussrate, die verschieden ist von der Maximaldurchflussrate, zunächst für eine vorgebbare Zeitdauer mit dem Ansteuersignal für die Maximaldurchflussrate und anschließend mit dem Ansteuersignal für die gewünschte Durchflussrate angesteuert wird.

Es kann sich im Laufe des Betriebs des Temperiersystems auch der Fall einstellen, dass sich die gewünschte Durchflussrate über einen vorgebbaren Mindestzeitraum nahe der Minimaldurchflussrate, aber darunter befindet. Um in einer derartigen Situation in kürzerer Zeit zur Minimaldurchflussrate zu gelangen, kann es von Vorteil sein, wenn der 2-Punkt-Antrieb dann, wenn er also ausgehend von dem vollständig geschlossenen Zustand des Ventils mit einem Ansteuersignal zur Einnahme des Minimalöffnungszustands des Ventils anzusteuern ist, zuvor mit einem Ansteuersignal angesteuert (und damit "vorgewärmt") worden ist, bei dem der Öffnungsgrad des Ventils kleiner ist als in der Minimalöffnungsstellung.

Wie bereits oben angedeutet, werden thermoelektrische 2-Punkt-Antriebe durch pulsmodulierte Signale, z.B. PWM-Ansteuersignale angesteuert. Das bedeutet, dass das Ansteuersignal dann, wenn der 2-Punkt-Antrieb arbeiten soll, stets den gleichen Wert für die elektrische Energie pro Zeiteinheit aufweist. Über die Zeitdauer, für die dieses Signal anliegt, kann dann die Größe der elektrischen Energie, die in den 2-Punkt-Antrieb eingebracht wird, gesteuert werden. Gemäß diesem Verständnis weist also das Ansteuersignal erfindungsgemäß unterschiedliche Größe auf, indem in Abhängigkeit von der Zeitdauer, für die das Ansteuersignal anliegt, unterschiedliche Energiemengen in das Heizelement eingebracht werden.

Durch geeignetes Verändern der dem Antrieb zugeführten elektrischen Energie kann der Verstellweg des Antriebs beeinflusst werden. Die Änderung der Energiezufuhr kann durch zyklisches Ein- und Ausschalten über einen elektronischen Schalter an der Regeleinheit geschehen (Pulsweitenmodulation, PWM). Aufgrund der thermischen Masse das Antriebs kann die Zykluszeit dieses Signals im Bereich von 10 Sekunden bis 1 Minute liegen, es ist also nicht notwendig, den Antrieb über eine aufwendige Phasenanschnittsteuerung zu betreiben.

Statt eines PWM-Signals kann man grundsätzlich auch ein amplitudenmoduliertes Signal oder ein bezüglich seines Pegels moduliertes Signal einsetzen, um auf diese Weise den thermoelektrischen 2-Punkt-Antrieb mit unterschiedlichen großen Ansteuersignalen, d.h. mit unterschiedlicher elektrischer Energie zu betreiben.

Wie bereits oben erwähnt, lässt sich also auf unterschiedliche Weise eine Kalibrierung eines thermoelektrischen 2-Punkt-Ventilantriebs für ein Temperiersystem erfindungsgemäß dadurch realisieren und damit der 2-Punkt-Antrieb als stetiger Antrieb betrieben werden, indem
- anhand der Größe des Ansteuersignals des 2-Punkt-Antriebs für die Minimaldurchflussrate und des Maximalwerts des Ansteuersignals, bei dem das Ventil vollständig geöffnet ist, ermittelt, berechnet oder abgeschätzt wird, welche Größe für das Ansteuersignal des 2-Punkt-Antriebs für eine bestimmte Durchflussrate des Temperiermediums zwischen der Minimaldurchflussrate und der Durchflussrate bei Maximalöffnungsstellung des Ventils erforderlich ist, und/oder
- anhand der Größe des Ansteuersignals des 2-Punkt-Antriebs für die Maximaldurchflussrate und des Minimalwerts des Ansteuersignals ermittelt, berechnet oder abgeschätzt wird, welche Größe für das Ansteuersignal des 2-Punkt-Antriebs für eine bestimmte Durchflussrate des Temperiermediums zwischen der Maximaldurchflussrate und der Durchflussrate von Null bei vollständig geschlossenem Ventil erforderlich ist, und/oder
- anhand der Größe des Ansteuersignals des 2-Punkt-Antriebs für die Minimaldurchflussrate und der Größe des Ansteuersignals des 2-Punkt-Antriebs für die Maximaldurchflussrate ermittelt, berechnet oder abgeschätzt wird, welche Größe für das Ansteuersignal des 2-Punkt-Antriebs für eine bestimmte Durchflussrate des Temperiermediums zwischen der Minimaldurchflussrate und der Maximaldurchflussrate erforderlich ist.

Um die Einflüsse der Umgebungstemperatur, der vorherigen Erwärmung des Antriebs sowie fertigungsbedingter Streuungen der 2-Punkt-Antriebe auf den erzielten Hub der Antriebe auszugleichen, wird gemäß eines Ausführungsbeispiels der Erfindung folgendes Verfahren vorgeschlagen:
1) In einem (z.B. regelmäßig wiederkehrenden) ersten Kalibrierschritt wird das PWM-Signal ermittelt, bei dem der 2-Punkt-Antrieb das Ventil soweit öffnet, dass Durchfluss erkannt werden kann. Dieses Signal wird für jeden 2-Punkt-Antrieb als Untergrenze des Verstellbereichs abgespeichert.
2) In einem (z.B. ebenfalls regelmäßig wiederkehrenden) zweiten Kalibrierschritt wird das PWM-Signal ermittelt, bei dem der 2-Punkt-Antrieb soweit geöffnet hat, dass keine Zunahme des Durchflusses mehr erkannt werden kann. Dieses Signal wird für jeden Antrieb als Obergrenze des Verstellbereichs abgespeichert.
3) Für die Erkennung des Durchflusses können verwendet werden:
   - ein im gemeinsamen Rücklauf oder Vorlauf eingebrachter elektronischer Durchflussmengen- oder -ratenmesser,
   - ein im gemeinsamen Rücklauf oder Vorlauf eingebrachter Temperaturfühler,
   - ein Temperaturfühler oder ein elektronischer Durchflussmengenmesser in jedem Abgang (Temperierkreis),
   - Durchflussschalter, die bei einem bestimmten Durchflusswert aktiviert werden, zur Erkennung des Öffnens (ausgehend von der Schließ-Position) des Ventils,
   - Kombinationen der zuvor genannten Fühler und Anordnungen.
4) Wurde der 2-Punkt-Antrieb über einen bestimmten Zeitraum (von z.B. 20 Minuten) nicht betrieben, erfolgt zuerst unabhängig von der bestehenden Anforderung an die Größe der Durchflussrate ein Einschalten des Antriebs für eine bestimmte Mindestzeitdauer (von z.B. 4 Minuten). Diese Mindestzeitdauer ist so gewählt, dass der 2-Punkt-Antrieb komplett öffnet oder um einen gewissen vorgebbaren Grad geöffnet ist.
5) Nach Ablauf der Mindestzeitdauer wird das von der Regelung des Temperiersystems errechnete PWM-Signal angelegt, so dass der 2-Punkt-Antrieb das Ventil nach einer bestimmten Zeit (von z.B. 5 Minuten) auf das vorberechnete Öffnungsmaß fährt.
6) Besteht eine so geringe Anforderung an die Wärmeenergiezufuhr eines Raums, dass der errechnete Öffnungsgrad des Ventils sich im Bereich der minimal möglichen Öffnung befindet, kann der Antrieb durch Ansteuern mit einem Signal unterhalb des oben unter 1) ermittelten Werts andauernd angesteuert werden, um beim Ansteigen des Wärmebedarfs des Raums durch geringes Anheben des Signals über der oben unter 1) ermittelten Grenze das Ventil ohne ungewolltes zu starkes Öffnen feinfühlig und in kurzer Zeit bis zum gewünschten Grad zu öffnen.
7) Das von der Regelungstechnik errechnete PWM-Signal resultiert aus der Differenz zwischen Raumtemperatur und Sollwert, wobei hier die klassischen Methoden eines P- oder PI-Reglers oder eines Reglers mit selbstoptimierendem Regelverhalten angewendet werden können. Zusätzlich kann das von der Regelungstechnik errechnete PWM-Signal von der oben unter 3) genannten Sensorik im Sinne einer Optimierung des Regelverhaltens beeinflusst werden.

Die Verwendung thermoelektrischer 2-Punkt-Antriebe in der beschriebenen Weise bringt Vorteile im erzielten Regelergebnis bei Heiz- und Kühlsystemen, die eine geringere thermische Trägheit aufweisen als Flächenheizungs- und Kühlungssysteme, bei denen die Rohre in eine (z.B. Estrich-)Materialschicht mit den typischen Aufbauhöhen eingebettet sind.

Durch die stetige Ansteuerung der Ventile können Maßnahmen zur Verbesserung der hydraulischen Verhältnisse durchgeführt werde, die bei Temperiersystemen ein besseres Regelergebnis zur Folge haben.

Für die vorgeschlagene erfindungsgemäße Betriebsweise ist zwar eine gewisse Zusatzsensorik notwendig (die aber bei modernen Temperiersystemen bereits vorhanden sind oder gefordert werden); auf der anderen Seite können die preisgünstigen thermoelektrischen Antriebe anstelle der aufwendigeren stetigen Antriebe verwendet werden. Auf Seiten der Regelungstechnik können einfache schaltende Ausgänge zur Ansteuerung der Antriebe verwendet werden.

Durch die erfindungsgemäße Art der Ansteuerung der thermoelektrischen 2-Punkt-Antriebe zum Betrieb als stetige Antriebe ist auch eine Steigerung der Lebenszeit der 2-Punkt-Antriebe zu erwarten. Mit der Erfindung lässt sich eine bedarfsgerechte Ansteuerung von Ventilen von z.B. Heizkreisverteilern für Flächenheizung/-Kühlung, Heizkörpern und generell Systemen mit geringer thermischer Speicherfähigkeit realisieren.

## Patentansprüche

1. Verfahren zur Ansteuerung eines thermoelektrischen 2-Punkt-Antriebs eines Ventils eines mit einem Temperiermedium betriebenen Heizungs- und/oder Kühlungssystems z.B. eines Gebäudes, insbesondere eines Flächenheizungs- und/oder Kühlungssystems, wobei bei dem Verfahren
- der 2-Punkt-Antrieb durch ein elektrisches Ansteuersignal angesteuert wird, dessen Größe in Abhängigkeit von einer aktuell gewünschten Durchflussrate des Temperiermediums auf einen Wert zwischen einschließlich einem Minimalwert, bei dem das Ventil vollständig geschlossen ist, und einschließlich einem Maximalwert, bei dem das Ventil vollständig geöffnet ist, eingestellt wird,
- der 2-Punkt-Antrieb zur Ermittlung einer Minimalöffnungsstellung des Ventils, bei der sich eine vorgebbare Minimaldurchflussrate des Temperiermediums einstellt, und/oder zur Ermittlung einer Maximalöffnungsstellung des Ventils, bei der sich eine vorgebbare Maximaldurchflussrate oder die Maximaldurchflussrate des Temperiermediums einstellt, sequentiell durch Ansteuersignale unterschiedlicher Größe angesteuert wird,
- ein in dem Heizungs- und/oder Kühlungssystem angeordneter Sensor ein Messsignal ausgibt, das die sich aufgrund der Ansteuerung des 2-Punkt-Antriebs und damit der Einstellung des Ventils ergebende Durchflussrate des Temperiermediums repräsentiert, und
- das oder die Ansteuersignale für den 2-Punkt-Antrieb, das bzw. die der Minimaldurchflussrate und/oder der Maximaldurchflussrate zugeordnet ist bzw. sind, abgespeichert wird bzw. werden.

2. Verfahren nach Anspruch 1, **dadurch gekennzeichnet, dass** die Minimaldurchflussrate ausgehend von einem Ansteuersignal für den 2-Punkt-Antrieb, bei dem das Ventil vollständig geschlossen ist, durch Vergrößern des Ansteuersignals ermittelbar ist, bis der Sensor ein die Minimaldurchflussrate repräsentierendes Messsignal ausgibt.

3. Verfahren nach Anspruch 1 oder 2, **dadurch gekennzeichnet, dass** die Maximaldurchflussrate ausgehend von einem Ansteuersignal für den 2-Punkt-Antrieb, bei dem das Ventil noch nicht vollständig geschlossen ist, durch Vergrößern des Ansteuersignals ermittelbar ist, bis der Sensor ein Messsignal ausgibt, das eine Durchflussrate repräsentiert, welche sich gegenüber der Durchflussrate, die durch eines der vorherigen Messsignale des Sensors repräsentiert ist, um weniger als eine vorgebbare Differenz unterscheidet.

4. Verfahren nach Anspruch 1 oder 2, **dadurch gekennzeichnet, dass** die Maximaldurchflussrate ausgehend von einem Ansteuersignal für den 2-Punkt-Antrieb, bei dem das Ventil vollständig geöffnet ist, durch Verkleinerung des Ansteuersignals ermittelbar ist, bis der Sensor ein Messsignal ausgibt, das eine Verringerung der Durchflussrate um eine vorgebbare Differenz gegenüber der Durchflussrate bei in Maximalöffnungsstellung befindlichem Ventil repräsentiert.

5. Verfahren nach einem der Ansprüche 1 bis 4, **dadurch gekennzeichnet, dass**, ausgehend von einem Startwert, die Ermittlung der Minimaldurchflussrate und/oder der Maximaldurchflussrate des Temperiermediums und/oder die Art der zwecks Ermittlung der Minimaldurchflussrate und/oder der Maximaldurchflussrate des Temperiermediums erfolgenden Änderung des Ansteuersignals für den 2-Punkt-Antrieb anhand bekannter mathematischer Optimierungsverfahren, insbesondere Iterationsverfahren wie z.B. sukzessive Approximation, oder anhand bekannter Brute-Force-Verfahren durchgeführt wird.

6. Verfahren nach einem der Ansprüche 1 bis 5, **dadurch gekennzeichnet, dass** als Sensor ein mechanischer oder elektrischer/elektronischer Durchflussmengen- oder -ratenmesser, ein Temperaturfühler, ein Durchflussschalter oder eine Kombination der zuvor genannten Sensoren vorgesehen ist.

7. Verfahren nach einem der Ansprüche 1 bis 6, **dadurch gekennzeichnet, dass** das Heizungs- und/oder Kühlungssystem eine Vorlaufleitung und eine Rücklaufleitung und mindestens einen zwischen der Vorlaufleitung und der Rücklaufleitung geschalteten Heiz- und/oder Kühlkreis aufweist und dass in jedem Heiz- und/oder Kühlkreis ein Sensor angeordnet ist oder für sämtliche Heiz- und/oder Kühlkreise ein Sensor in der für sämtliche Heiz- und/oder Kühlkreise gemeinsamen Vorlaufleitung und/oder Rücklaufleitung angeordnet ist.

8. Verfahren nach einem der Ansprüche 1 bis 7, **dadurch gekennzeichnet, dass** der 2-Punkt-Antrieb dann, wenn er für eine vorgebbare Mindestzeitspanne nicht betrieben worden ist, zum Betrieb für eine gewünschte Durchflussrate, die verschieden ist von der Maximaldurchflussrate, zunächst für eine vorgebbare Zeitdauer mit dem Ansteuersignal für die Maximaldurchflussrate und anschließend mit dem Ansteuersignal für die gewünschte Durchflussrate angesteuert wird.

9. Verfahren nach einem der Ansprüche 1 bis 8, **dadurch gekennzeichnet, dass** der 2-Punkt-Antrieb dann, wenn er ausgehend von dem vollständig geschlossenen Zustand des Ventils mit einem Ansteuersignal zur Einnahme des Minimalöffnungszustands des Ventils anzusteuern ist, zuvor mit einem Ansteuersignal angesteuert wird, bei dem der Öffnungsgrad des Ventils kleiner ist als in der Minimalöffnungsstellung.

10. Verfahren nach einem der Ansprüche 1 bis 9, **dadurch gekennzeichnet, dass** das Ansteuersignal ein modulierte Pulse aufweisendes Signal wie z.B. ein PWM-Signal oder ein amplitudenmoduliertes Signal oder ein bezüglich seines Pegels moduliertes Signal ist.

11. Verfahren nach einem der Ansprüche 1 bis 10, **dadurch gekennzeichnet, dass**
- anhand der Größe des Ansteuersignals des 2-Punkt-Antriebs für die Minimaldurchflussrate und des Maximalwerts des Ansteuersignals, bei dem das Ventil vollständig geöffnet ist, ermittelt, berechnet oder abgeschätzt wird, welche Größe für das Ansteuersignal des 2-Punkt-Antriebs für eine bestimmte Durchflussrate des Temperiermediums zwischen der Minimaldurchflussrate und der Durchflussrate bei Maximalöffnungsstellung des Ventils erforderlich ist, und/oder
- anhand der Größe des Ansteuersignals des 2-Punkt-Antriebs für die Maximaldurchflussrate und des Minimalwerts des Ansteuersignals ermittelt, berechnet oder abgeschätzt wird, welche Größe für das Ansteuersignal des 2-Punkt-Antriebs für eine bestimmte Durchflussrate des Temperiermediums zwischen der Maximaldurchflussrate und der Durchflussrate von Null bei vollständig geschlossenem Ventil erforderlich ist, und/oder
- anhand der Größe des Ansteuersignals des 2-Punkt-Antriebs für die Minimaldurchflussrate und der Größe des Ansteuersignals des 2-Punkt-Antriebs für die Maximaldurchflussrate ermittelt, berechnet oder abgeschätzt wird, welche Größe für das Ansteuersignal des 2-Punkt-Antriebs für eine bestimmte Durchflussrate des Temperiermediums zwischen der Minimaldurchflussrate und der Maximaldurchflussrate erforderlich ist.

## Claims

1. Method for actuating a thermoelectric two-point drive of a valve of a temperature-control-medium-operated heating and/or cooling system e.g. of a building, in particular a radiant heating and/or cooling system, wherein, in the method,
- the two-point drive is actuated by an electrical actuation signal, the magnitude of which is set on the basis of a currently desired flow rate of the temperature-control medium to a value between a minimum value at which the valve is completely closed and a maximum value at which the valve is completely open, inclusive,
- the two-point drive is actuated sequentially by actuation signals of different magnitudes for determining a minimum opening position of the valve at which a predetermined minimum flow rate of the temperature-control medium is set and/or for determining a maximum opening position of the valve at which a predetermined maximum flow rate or the maximum flow rate of the temperature-control medium is set,
- a sensor arranged in the heating and/or cooling system emits a measuring signal that represents the flow rate of the temperature-control medium resulting from the actuation of the two-point drive and thus the setting of the valve, and
- the actuation signal or signals for the two-point drive which is/are assigned to the minimum flow rate and/or the maximum flow rate is/are stored.

2. Method according to claim 1, **characterised in that**, proceeding from an actuation signal for the two-point drive at which the valve is completely closed, the minimum flow rate can be determined by increasing the actuation signal until the sensor emits a measuring signal representing the minimum flow rate.

3. Method according to claim 1 or 2, **characterised in that**, proceeding from an actuation signal for the two-point drive at which the valve is not yet completely closed, the maximum flow rate can be determined by increasing the actuation signal until the sensor emits a measuring signal representing a flow rate that differs from the flow rate represented by one of the previous measuring signals from the sensor by less than a predetermined difference.

4. Method according to claim 1 or 2, **characterised in that**, proceeding from an actuation signal for the two-point drive at which the valve is completely open, the maximum flow rate can be determined by reducing the actuation signal until the sensor emits a measuring signal that represents a reduction in the flow rate by a predetermined difference compared with the flow rate in a valve in the maximum opening position.

5. Method according to any of claims 1 to 4, **characterised in that**, proceeding from a starting value, the minimum flow rate and/or the maximum flow rate of the temperature-control medium and/or the type of change to the actuation signal for the two-point drive carried out to determine the minimum flow rate and/or the maximum flow rate of the temperature-control medium are determined on the basis of known mathematical optimisation processes, in particular iteration processes such as successive approximation, or on the basis of known brute-force processes.

6. Method according to any of claims 1 to 5, **characterised in that** a mechanical or electrical/electronic flow-volume or flow-rate meter, a temperature sensor, a flow switch or a combination of the previously mentioned sensors are provided as the sensor.

7. Method according to any of claims 1 to 6, **characterised in that** the heating and/or cooling system comprises a feed line and return line and at least one heating and/or cooling circuit connected between the feed line and the return line, and **in that** a sensor is arranged in each heating and/or cooling circuit or, for all the heating and/or cooling circuits, one sensor is arranged in the feed line and/or return line shared by all the heating and/or cooling circuits.

8. Method according to any of claims 1 to 7, **characterised in that**, if it has not been operated for a predetermined minimum time period, for operation at a desired flow rate that is different from the maximum flow rate, the two-point drive is first actuated for a predetermined time period by the actuation signal for the maximum flow rate and is then actuated by the actuation signal for the desired flow rate.

9. Method according to any of claims 1 to 8, **characterised in that**, when it needs to be actuated, proceeding from the completely closed state of the valve, by an actuation signal for occupying the minimum opening state of the valve, the two-point drive is previously actuated by an actuation signal at which the degree of opening of the valve is less than in the minimum opening position.

10. Method according to any of claims 1 to 9, **characterised in that** the actuation signal is a signal comprising a modulated pulse, such as a PWM signal or an amplitude-modulated signal or a signal modulated with respect to its level.

11. Method according to any of claims 1 to 10, **characterised in that**,
- on the basis of the magnitude of the actuation signal of the two-point drive for the minimum flow rate and of the maximum value of the actuation signal at which the valve is completely open, the magnitude for the actuation signal of the two-point drive required for a certain flow rate of the temperature-control medium between the minimum flow rate and the flow rate in the maximum opening position of the valve is determined, calculated or estimated, and/or,
- on the basis of the magnitude of the actuation signal of the two-point drive for the maximum flow rate and of the minimum value of the actuation signal, the magnitude for the actuation signal of the two-point drive required for a certain flow rate of the temperature-control medium between the maximum flow rate and the flow rate of zero when the valve is completely closed is determined, calculated or estimated, and/or,
- on the basis of the magnitude of the actuation signal of the two-point drive for the minimum flow rate and of the magnitude of the actuation signal of the two-point drive for the maximum flow rate, the magnitude for the actuation signal of the two-point drive required for a certain flow rate of the temperature-control medium between the minimum flow rate and the maximum flow rate is determined, calculated or estimated.

## Revendications

1. Procédé servant à piloter un entraînement à 2 points thermoélectrique d'une soupape d'un système de chauffage et/ou de refroidissement fonctionnant avec un agent de thermorégulation, par exemple d'un bâtiment, en particulier d'un système de chauffage et/ou de refroidissement de surfaces, dans lequel dans le procédé
- l'entraînement à 2 points est piloté par un signal de pilotage électrique, dont la grandeur est réglée en fonction d'un débit souhaité en temps réel de l'agent de thermorégulation sur une valeur entre y compris une valeur minimale, à laquelle la soupape est totalement fermée, et y compris une valeur maximale, à laquelle la soupape est totalement ouverte,
- l'entraînement à 2 points est piloté de manière séquentielle par des signaux de pilotage de différente grandeur pour déterminer une position d'ouverture minimale de la soupape, dans laquelle un débit minimal pouvant être spécifié de l'agent de thermorégulation se règle, et/ou pour déterminer une position d'ouverture maximale de la soupape, dans laquelle un débit maximal pouvant être spécifié ou le débit maximal de l'agent de thermorégulation se règle,
- un capteur disposé dans le système de chauffage et/ou de refroidissement émet un signal de mesure, qui représente le débit de l'agent de thermorégulation résultant du fait du pilotage de l'entraînement à 2 points et ainsi du réglage de la soupape, et
- le ou les signaux de pilotage pour l'entraînement à 2 points, qui est ou sont associé(s) au débit minimal et/ou au débit maximal, est ou sont sauvegardés.

2. Procédé selon la revendication 1, **caractérisé en ce que** le débit minimal peut être déterminé en partant d'un signal de pilotage pour l'entraînement à 2 points, pour lequel la soupape est totalement fermée, en amplifiant le signal de pilotage jusqu'à ce que le capteur émette un signal de mesure représentant le débit minimal.

3. Procédé selon la revendication 1 ou 2, **caractérisé en ce que** le débit maximal peut être déterminé en partant d'un signal de pilotage pour l'entraînement à 2 points, pour lequel la soupape n'est pas encore totalement fermée, en amplifiant le signal de pilotage jusqu'à ce que le capteur émette un signal de mesure qui représente un débit, qui se distingue par rapport au débit, qui est représenté par un des signaux de mesure précédents du capteur, d'une valeur inférieure à une différence pouvant être spécifiée.

4. Procédé selon la revendication 1 ou 2, **caractérisé en ce que** le débit maximal peut être déterminé en partant d'un signal de pilotage pour l'entraînement à 2 points, pour lequel la soupape est totalement ouverte, en réduisant le signal de pilotage jusqu'à ce que le capteur émette un signal de mesure, qui représente une réduction du débit d'une différence pouvant être spécifiée par rapport au débit dans le cas d'une soupape se trouvant en position d'ouverture maximale.

5. Procédé selon l'une quelconque des revendications 1 à 4, **caractérisé en ce qu'**en partant d'une valeur de départ, la détermination du débit minimal et/ou du débit maximal de l'agent de thermorégulation et/ou le type de la modification, effectuée aux fins de la détermination du débit minimal et/ou du débit maximal de l'agent de thermorégulation, du signal de pilotage pour l'entraînement à 2 points sont mis en œuvre à l'aide de procédés d'optimisation mathématiques connus, en particulier de procédés d'itération tels qu'une approximation successive, ou à l'aide de procédés par force brute connus.

6. Procédé selon l'une quelconque des revendications 1 à 5, **caractérisé en ce que** sont prévus en tant que capteur un débitmètre mécanique ou électrique/électronique, une sonde de température, un commutateur de débit ou une combinaison des capteurs mentionnés ci-avant.

7. Procédé selon l'une quelconque des revendications 1 à 6, **caractérisé en ce que** le système de chauffage et/ou de refroidissement présente un conduit d'arrivée et un conduit de retour et au moins un circuit chauffant et/ou refroidissant branché entre le conduit d'arrivée et le conduit de retour, et qu'un capteur est disposé dans chaque circuit chauffant et/ou refroidissant ou un capteur est disposé dans le conduit d'arrivée et/ou le conduit de retour commun à tous les circuits chauffants et/ou refroidissants pour tous les circuits chauffants et/ou refroidissants.

8. Procédé selon l'une quelconque des revendications 1 à 7, **caractérisé en ce que** l'entraînement à 2 points est piloté, quand il n'a pas fonctionné pendant un laps de temps minimal pouvant être spécifié, pour fonctionner à un débit souhaité, qui est différent du débit maximal, d'abord pendant une durée pouvant être spécifiée avec le signal de pilotage pour le débit maximal puis avec le signal de pilotage pour le débit souhaité.

9. Procédé selon l'une quelconque des revendications 1 à 8, **caractérisé en ce que** l'entraînement à 2 points est piloté, quand il est à piloter en partant de l'état totalement fermé de la soupape, avec un signal de pilotage pour adopter l'état d'ouverture minimale de la soupape, au préalable avec un signal de pilotage, pour lequel le degré d'ouverture de la soupape est inférieur à celui dans la position d'ouverture minimale.

10. Procédé selon l'une quelconque des revendications 1 à 9, **caractérisé en ce que** le signal de pilotage est un signal présentant des impulsions modulées, par exemple un signal modulé en largeur d'impulsion ou un signal modulé en amplitude ou un signal modulé en termes de niveau.

11. Procédé selon l'une quelconque des revendications 1 à 10, **caractérisé en ce que**
- est déterminée, calculée ou évaluée, à l'aide de la grandeur du signal de pilotage de l'entraînement à 2 points pour le débit minimal et de la valeur maximale du signal de pilotage, pour laquelle la soupape est totalement ouverte, la grandeur, qui est requise pour le signal de pilotage de l'entraînement à 2 points pour un débit donné de l'agent de thermorégulation entre le débit minimal et le débit pour la position d'ouverture maximale de la soupape, et/ou
- est déterminée, calculée ou évaluée, à l'aide de la grandeur du signal de pilotage de l'entraînement à 2 points pour le débit maximal et de la valeur minimale du signal de pilotage, la grandeur, qui est requise pour le signal de pilotage de l'entraînement à 2 points pour un débit donné de l'agent de thermorégulation entre le débit maximal et le débit de zéro pour une soupape totalement fermée, et/ou
- est déterminée, calculée ou évaluée, à l'aide de la grandeur du signal de pilotage de l'entraînement à 2 points pour le débit minimal et de la grandeur du signal de pilotage de l'entraînement à 2 points pour le débit maximal la grandeur, qui est requise pour le signal de pilotage de l'entraînement à 2 points pour un débit donné de l'agent de thermorégulation entre le débit minimal et le débit maximal.
